**Europäisches Patentamt**

**European Patent Office**

**Office européen des brevets**

(19)

(11) Veröffentlichungsnummer: **0 045 406**
**B1**

# (12) EUROPÄISCHE PATENTSCHRIFT

(45) Veröffentlichungstag der Patentschrift:
**07.03.84**

(21) Anmeldenummer: **81105503.7**

(22) Anmeldetag: **14.07.81**

(51) Int. Cl.³: **B 60 N 1/08**, F 16 C 29/04

(54) **Geradlinig führende Verstellschiene.**

(30) Priorität: **31.07.80 DE 3029127**

(43) Veröffentlichungstag der Anmeldung:
**10.02.82 Patentblatt 82/6**

(45) Bekanntmachung des Hinweises auf die Patenterteilung:
**07.03.84 Patentblatt 84/10**

(84) Benannte Vertragsstaaten:
**AT BE CH FR GB IT LI NL SE**

(56) Entgegenhaltungen:
**DE - A - 2 342 577**
**DE - C - 940 208**
**DE - U - 1 944 578**

(73) Patentinhaber: **Ignaz Vogel GmbH & Co KG,**
**Fahrzeugsitze, Kleinsteinbacher Strasse 42-44,**
**D-7500 Karlsruhe 41-Stu (DE)**

(72) Erfinder: **Vogel, Ignaz, Kleinsteinbacher Strasse 44,**
**D-7500 Karlsruhe 41-Stu (DE)**

(74) Vertreter: **Trappenberg, Hans,**
**Postfach 1909 Wendtstrasse 1, D-7500 Karlsruhe 21 (DE)**

Die Erfindung betrifft eine geradlinig führende Verstellschiene, die im Oberbegriff des Anspruches 1 angegeben ist.

Derartige Verstellschienen sind sowohl mit Gleitlager wie auch mit Kugel- beziehungsweise Wälzlager bekannt. Insbesondere zum Verstellen von Fahrgastsitzen wurden bisher Verstellschienen mit Gleitlagerung bevorzugt, weil diese Schienen eher den an die Lagerung und Positionierung von Fahrgastsitzen gestellten Anforderungen entsprachen. So müssen die Fahrgastsitze, trotz der Verstellmöglichkeit, sicher am Fahrzeugchassis befestigt sein, so dass die Fahrgastsitze auch einem verhältnismässig starken Aufprall standhalten, sie müssen so befestigt sein, dass sie dem Benutzer auch ein sicheres Sitzgefühl vermitteln, dürfen also nicht «schwimmend» befestigt sein, sondern müssen in jeder Verstellposition sicher arretiert sein, sie müssen auch hinsichtlich der Verstellmechanik eine verhältnismässig lange Standzeit aufweisen und sie müssen vor allen Dingen, ob nun der Fahrgastsitz belastet ist oder nicht, klapperfrei sein. Könnten die Bedingungen hinsichtlich der sicheren Befestigung sowohl von Verstellschienen mit Gleitlagerung wie auch mit Kugel- beziehungsweise Wälzlagerung gleichermassen gut erfüllt werden, so lässt sich doch die Klapperfreiheit eher bei Verstellschienen mit Gleitlagerung erreichen. Andererseits ist die Standzeit von kugel- oder wälzgelagerten Verstellschienen deutlich höher als diejenige von Verstellschienen mit Gleitlagerung.

Da auf die hohe Standzeit, die im allgemeinen der Standzeit der Fahrgastraum-Bestuhlung entsprechen muss, nicht verzichtet werden kann, wird immer mehr zu kugel- beziehungsweise wälzgelagerten Verstellschienen übergegangen. Die Klapperfreiheit dieser Schienen wird versucht dadurch zu erreichen, dass die gegeneinander verschiebbaren Schienenteile durch zusätzliche feder- oder elastomer-belastete Kugeln beziehungsweise Walzen zusammengepresst werden. Dieses Zusammenpressen geschieht im allgemeinen im Sinne einer Belastung des Fahrgastsitzes, so dass also der Verstellschiene eine Vorspannung in Richtung Belastung vorgegeben ist. Zusätzlich hinzu kommt dann noch die tatsächliche Belastung, so dass derartige Verstellschienen sehr kräftig und damit auch sehr schwer ausgeführt werden müssen. Hinzu kommt noch, dass derartige Verstellschienen schwer gängig sind, zum Verstellen eines Fahrgastsitzes also verhältnismässig grosse Kräfte notwendig sind. Damit ergibt sich auch eine weitere Forderung an derartige Verstellschienen: Sie müssen, um die Verstellung eines Fahrgastsitzes auch durch körperlich schwache Personen durchführen zu können leichtgängig sein.

Eine Verstellschiene der oben beschriebenen Art ist beispielsweise in der DE-PS 940 208 beschrieben. Bei dieser Konstruktion umfasst eine Laufschiene endständige, nach aussen abgebogene Lappen einer U-förmigen Tragschiene, wobei zwischen Laufschiene und Tragschiene Kugeln eingefügt sind. Diese Kugeln laufen auf am Grund der U-förmigen Tragschiene angeordneten Käfig-Laufflächen, zwischen denen und dem Grund der U-förmigen Tragschiene ein Elastomer angeordnet ist. Dieses Elastomer verhindert zwar im Ruhezustand ein Klappern dieser so ausgeführten Verstellschiene, kann jedoch auch keine Leichtgängigkeit herstellen, da bei Belastung die Laufschiene auf die nach aussen abstehenden Lappen der Tragschiene aufgepresst wird und sich dadurch doch wieder eine grosse, die Leichtgängigkeit im negativen Sinne beeinflussende Gleitfläche ergibt.

Aufgabe der Erfindung ist es daher, eine Verstellschiene der beschriebenen Art anzugeben, die eine sichere Verbindung zwischen einem festen und einem verschiebbaren Teil ergibt, die gewichtsmässig leicht ist, die klapperfrei ist, die leichtgängig ist und schliesslich auch auf einfache Art und Weise und damit preiswert herstellbar ist. Erreicht wird dies nach der Erfindung durch die kennzeichnenden Merkmale des Anspruches 1.

Nicht mehr also wie bei den bekannten Verstellschienen, werden die gegeneinander verschiebbaren Tragschienen federnd aufeinandergepresst, sondern eine Konstruktion angegeben, bei der das Elastomer die Tragschienen gegen die Belastungsrichtung verspannt. Bei Belastung wird damit diese Verspannung aufgehoben beziehungsweise gemindert, so dass schon allein durch diese Massnahme die Leichtgängigkeit einer solchen Verstellschiene gewährleistet ist. Diese Konstruktion macht sich die Tatsache zunutze, dass eine belastete Verstellschiene nicht klappern kann. Die Belastung erfolgt bei der Verstellschiene nach der Erfindung einmal durch die Vorspannung des Elastomers und zum anderen durch die Belastung beispielsweise durch eine auf dem Fahrgastsitz Platz nehmende Person. Eine derartige Verstellschiene ist damit nicht nur leichtgängig, sondern auch, im belasteten wie im unbelasteten Zustand, klapperfrei. Die Verwendung eines Vierkantrohres als Tragschiene und einer in dem Vierkantrohr verschiebbaren U-Schiene hat nicht nur den Vorteil einer äusserst sicheren Verbindung zwischen diesen beiden Schienen, da die verschiebbare Schiene innerhalb des Vierkantrohres, der feststehenden Tragschiene, angeordnet ist, sondern auch, dass jegliche Verletzungsgefahr ausgeschlossen ist. Die sichere Unterbringung und damit Verbindung der U-Schiene innerhalb des Vierkantrohres lässt auch eine verhältnismässig leichte Ausführung der Verstellschiene nach der Erfindung zu, so dass das von einem Fahrzeug mitzuführende Totgewicht dadurch deutlich vermindert wird. Ausserdem ist eine derartige Verstellschiene auch einfach und damit äusserst preiswert herstellbar.

Um ein Fressen der aufeinander gleitenden Teile zu vermeiden, wird zweckmässigerweise zwischen den einander zugekehrten Flächen von U-Schiene und Vierkantrohr ein Gleitblech angeordnet, das vorteilhafterweise aus Federstahl gefertigt wird. Auch die Führung für die Kugeln wird mit Vorteil aus Federblech geformt und etwa lyraförmig gebogen. Durch die Lyraform wird bereits eine Vorspannung erzielt, die die elastische Wirkung des eingefügten Elastomers ergänzt. Dieses Elastomer kann bei einer so gestalteten Führung in die längsverlaufenden Hohlräume zwischen den Tragschienen und den Führungen eingefügt werden, wobei überraschenderweise Elastomerschläuche sowohl hinsichtlich der Funktion wie auch der Standzeit besondere Vorteile aufweisen. Dies insbesondere dann, wenn als Elastomer ein Polyurethan-Elastomer eingesetzt wird.

Zum Positionieren der Verstellschiene empfiehlt es sich, am Vierkantrohr eine durch eine Bohrung im Vierkantrohr hindurch greifende, in eine von mindestens zwei Öffnungen in der U-Schiene eingreifende Kugel federnd verschiebbar zu lagern, wobei zweckmässigerweise auf der Kugel ein, durch eine Torsionsfeder belasteter, mit einem Betätigungshebel verbundener Exzenter aufliegt. Eine derartige Positionierung ist nicht nur äusserst sicher, sondern auch durch körperlich schwache Personen leicht zu betätigen.

Auf der Zeichnung ist ein Ausführungsbeispiel der erfindungsgemässen Verstellschiene schematisch dargestellt und zwar zeigen:

Fig. 1 eine Seitenansicht, teilweise geschnitten,

Fig. 2 einen Schnitt nach der Schnittlinie II der Fig. 1,

Fig. 3 die Seitenansicht einer Feststellvorrichtung und

Fig. 4 die Draufsicht auf die Feststellvorrichtung nach Fig. 3.

In einem Vierkantrohr 1 ist verschiebbar eine U-Schiene 2 angeordnet. Zwischen den zueinander gekehrten Flächen des Vierkantrohres 1 und der U-Schiene 2 ist ein aus Federstahl gebildetes Gleitblech 3 angeordnet. An der Innenseite des Steges 4 der U-Schiene 2 befindet sich ein etwa lyraförmig gebogenes unteres Führungsblech 5. In die durch die Biegung dieses unteren Führungsbleches 5 gebildeten langgestreckten Hohlräume sind Elastomerschläuche 6 eingelegt. Ein oberes Führungsblech 7, das ebenfalls etwa lyraförmig gebogen ist, ist gegenüber liegend an der oberen Innenseite des Vierkantrohres 1 angeordnet. Zwischen den beiden Führungsblechen 5, 7 befindet sich eine Kugel 8. Die beiden Führungsbleche 5, 7 sind an dem Vierkantrohr 1 beziehungsweise der U-Schiene 2 durch Nieten 9, 10 befestigt. Die Niete 10 ist mit einem Bolzen-Ansatz 11 versehen, der in einem Längsschlitz des Vierkantrohres 1 geführt ist. Die Nieten 9, 10 sind ausserdem durchbohrt und mit einem Gewinde zum Festschrauben beziehungsweise Aufschrauben der Last versehen.

Die Elastomerschläuche 6 ergeben eine solche Vorspannung, dass die U-Schiene 2 über das Gleitblech 3 fest auf die entsprechende Gleitfläche des Vierkantrohres 1 aufgepresst wird. Dadurch ist mit Sicherheit ein Klappern der Verstellschiene auch ohne Belastung vermieden. Bei Belastung, wobei die Last einerseits auf die Deckfläche des Vierkantrohres 1 und zum andern auf die Unterseite der U-Schiene 2 drückt, werden die Elastomerschläuche 6 zusammengepresst, so dass die U-Schiene 2 geringfügig von ihrer Gleitfläche abgehoben wird. Hierdurch ergibt sich einmal wiederum die Klapperfreiheit der erfindungsgemässen Verstellschiene, zum anderen jedoch auch deren Leichtgängigkeit, da die Reibung zwischen den verschiebbaren Teilen nahezu aufgehoben ist.

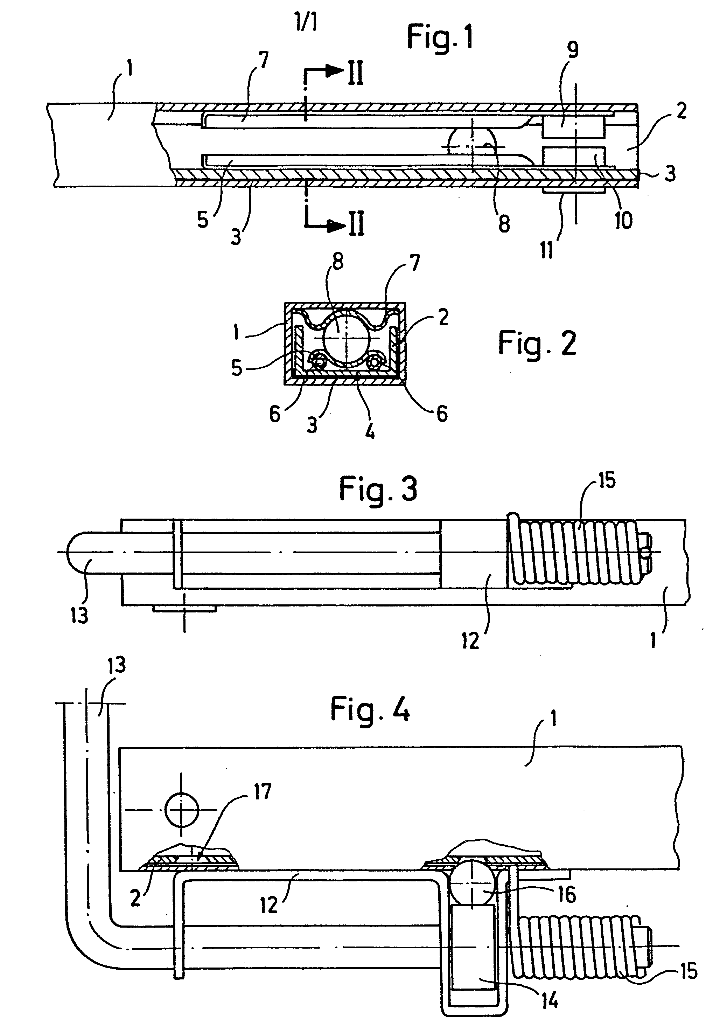

Die Fig. 3 und 4 zeigen eine, durch die Auswahl der Tragschienen als Vierkantrohr 1 und U-Schiene 2 mögliche Feststellvorrichtung. An dem Vierkantrohr 1 ist seitlich ein Lagerbock 12 angebracht, in dem ein Betätigungshebel 13 sowie ein Exzenter 14 gelagert ist. Eine Torsionsfeder 15 presst den Exzenter 14 auf eine Kugel 16, die durch eine Bohrung im Vierkantrohr 1 hindurch und in eine Öffnung 17 in der U-Schiene 2 eingreift. Durch diese Massnahme sind die beiden Tragschienen – das Vierkantrohr 1 und die U-Schiene 2 – fest gegeneinander arretiert. Diese Arretierung kann durch Verschwenken des Betätigungshebels 13, wodurch die Kugel 16 zurückweichen kann, aufgehoben werden. Die Kugel 16 schnappt nach Loslassen des Betätigungshebels 13 jedoch dann automatisch in die nächstgelegene Öffnung 17, nach dem Verschieben der Verstellschiene ein und arretiert damit die Verstellschiene in der gewünschten Position.

## Patentansprüche

1. Geradlinig führende Verstellschiene, insbesondere zum Aufbau von geradlinig zu verschiebenden und in bestimmten Positionen festzustellenden Fahrgastsitzen, mit zwei in Längsrichtung aufeinander verschiebbaren Tragschienen (1 und 2), zwischen denen mindestens zwei Kugeln (8) angeordnet sind, die auf dem Kugeldurchmesser entsprechend geformten langgestreckten Führungen (5, 7) laufen, die an zueinander gekehrten Flächen der Tragschienen (1, 2) angeordnet sind, wobei zwischen mindestens einer Führung (5, 7) und der zugehörigen Tragschiene ein Elastomer (6) eingefügt ist, dadurch gekennzeichnet, dass die Tragschienen ein Vierkantrohr (1) und eine in dem Vierkantrohr (1) verschiebbare U-Schiene (2) sind.

2. Verstellschiene nach Anspruch 1, dadurch gekennzeichnet, dass zwischen den einander zugekehrten Flächen von U-Schiene (2) und Vierkantrohr (1) ein Gleitblech (3) angeordnet ist.

3. Verstellschiene nach Anspruch 2, dadurch gekennzeichnet, dass das Gleitblech (3) aus Federstahl ist.

4. Verstellschiene nach einem oder mehreren der vorhergehenden Ansprüche, dadurch gekennzeichnet, dass die Führungen (5, 7) aus Federblech geformt sind.

5. Verstellschiene nach Anspruch 4, dadurch gekennzeichnet, dass die Führungen (5, 7) im Querschnitt etwa lyraförmig gebogen sind.

6. Verstellschiene nach Anspruch 5, dadurch gekennzeichnet, dass in die längsverlaufenden Hohlräume zwischen den Tragschienen und den Führungen (5, 7) jeweils ein langgestrecktes, im Querschnitt kreisförmiges Elastomer eingefügt ist.

7. Verstellschiene nach Anspruch 6, dadurch gekennzeichnet, dass das Elastomer ein Elastomerschlauch (6) ist.

8. Verstellschiene nach Anspruch 6 oder 7, dadurch gekennzeichnet, dass das Elastomer ein Polyurethan-Elastomer ist.

9. Verstellschiene nach Anspruch 1, dadurch gekennzeichnet, dass am Vierkantrohr (1) eine, durch eine Bohrung im Vierkantrohr (1) hindurchgreifende, in eine von mindestens zwei Öffnungen (17) in der U-Schiene 2 eingreifende Kugel (16) federnd verschiebbar gelagert ist.

10. Verstellschiene nach Anspruch 9, dadurch gekennzeichnet, dass auf der Kugel (16) ein durch eine Torsionsfeder (15) belasteter, mit einem Betätigungshebel (13) verbundener Exzenter (14) aufliegt.

**Revendications**

1. Rail de réglage guidant en ligne droite, en particulier pour la constitution de sièges de passager que l'on peut faire coulisser en ligne droite et bloquer dans des positions déterminées, comportant deux glissières porteuses (1, 2) pouvant coulisser l'une sur l'autre en direction longitudinale, entre lesquelles sont disposées au moins deux billes (8) qui se déplacent sur des guides allongés (5, 7) d'une forme correspondant au diamètre des billes et qui sont disposés sur des surfaces tournées l'une vers l'autre des glissières porteuses (1, 2), un élastomère (6) étant inséré entre au moins un guide (5, 7) et la glissière porteuse correspondante, caractérisé en ce que les glissières porteuses sont un tube carré (1) et une glissière en U (2) pouvant coulisser dans le tube carré (1).

2. Rail de réglage selon la revendication 1, caractérisé en ce qu'entre les surfaces tournées l'une vers l'autre de la glissière en U (2) et du tube carré (1) est disposée une plaque de glissement (3).

3. Rail de réglage selon la revendication 2, caractérisé en ce que la plaque de glissement (3) est en acier à ressort.

4. Rail de réglage selon une ou plusieurs des revendications précédentes, caractérisé en ce que les guides (5, 7) sont façonnés en partant de tôle à ressort.

5. Rail de réglage selon la revendication 4, caractérisé en ce que les guides (5, 7) sont courbés dans leur section à peu près en forme de lyre.

6. Rail de réglage selon la revendication 5, caractérisé en ce que dans chacune des cavités dirigées longitudinalement entre les glissières porteuses et les guides (5, 7) est inséré un élastomère allongé à section circulaire.

7. Rail de réglage selon la revendication 6, caractérisé en ce que l'élastomère est un tuyau en élastomère (6).

8. Rail de réglage selon la revendication 6 ou 7, caractérisé en ce que l'élastomère est un élastomère de polyuréthanne.

9. Rail de réglage selon la revendication 1, caractérisé en ce que sur le tube carré (1) est montée de manière à pouvoir coulisser élastiquement une bille (16) passant à travers une perforation du tube carré (1) et s'engageant dans l'une d'au moins deux ouvertures (17) de la glissière en U (2).

10. Rail de réglage selon la revendication 9, caractérisé en ce que sur la bille (16) s'applique en excentrique (14) sollicité par un ressort de torsion (15) et relié à un levier d'actionnement (13).

**Claims**

1. Adjusting rail arrangement providing rectilinear guidance, more particularly in the mounting of passenger seats with provision for rectilinear displacement and securement in certain positions, comprising two support rails (1 and 2) which are displaceable on one another in longitudinal direction and between which are disposed at least two balls (8) which run on elongate guides formed correspondingly to the ball diameter, which guides are disposed on mutually facing surfaces of the support rails (1, 2), with an elastomer sandwiched between at least one guide (5, 7) and the corresponding support rail, characterised in that, the support rails are a rectangular tube (1) and a U-rail (2) displaceable in the rectangular tube (1).

2. Adjusting rail arrangement according to Claim 1, characterised in that, a slide-strip (3) is disposed between the mutually facing surfaces of U-rail (2) and rectangular tube (1).

3. Adjusting rail arrangement according to Claim 2, characterised in that, the slide-strip (3) is of spring steel.

4. Adjusting rail arrangement according to one or more of the preceding claims, characterised in that, the guides (5, 7) are formed from spring sheet.

5. Adjusting rail arrangement according to Claim 4, characterised in that, the guides (5, 7) are bowed in approximately lyre-shape in cross-section.

6. Adjusting rail arrangement according to Claim 5, characterised in that, into each of the hollow spaces which run longitudinally between the support rails and the guides (5, 7) there is inserted an elongate elastomer of circular cross-section.

7. Adjusting rail arrangement according to Claim 6, characterised in that, the elastomer is an elastomeric tube (6).

8. Adjusting rail arrangement according to Claim 6 or 7, characterised in that, the elastomer is a polyurethane elastomer.

9. Adjusting rail arrangement according to Claim 1, characterised in that, on the rectangular tube (1) a ball (16) engaging and extending through an aperture in the rectangular tube (1) and engaging in one of at least two apertures (17) in the U-rail (2) is mounted so as to be resiliently displaceable.

10. Adjusting rail arrangement according to Claim 9, characterised in that, an eccentric (14) biased by means of a torsion spring (15) and connected with an operating lever (13) is disposed so as to act upon the ball (16).

1/1

**Fig.1**

**Fig. 2**

**Fig. 3**

**Fig. 4**